# FASCICULE DE BREVET EUROPEEN

(11) **EP 3 711 445 B1**
(45) Date de publication et mention de la délivrance du brevet: **29.05.2024**
(21) Numéro de dépôt: 18803687.5
(22) Date de dépôt: 19.11.2018
(51) Int. Cl.: H04W 76/16, H04W 76/14, H04W 4/70, H04L 12/12, H04L 12/46, H04W 12/50, H04W 84/18

(54) **PROCÉDÉ DE MISE EN SERVICE INDIRECTE D'AU MOINS UN OBJET CONNECTÉ ET SYSTÈME ASSOCIÉ**
VERFAHREN ZUR INDIREKTEN AKTIVIERUNG VON MINDESTENS EINEM VERBUNDENEN OBJEKT UND ZUGEHÖRIGES SYSTEM
METHOD FOR INDIRECTLY ACTIVATING AT LEAST ONE CONNECTED OBJECT AND ASSOCIATED SYSTEM

(30) Priorité: 17.11.2017 FR 1760843
(43) Date de publication de la demande: 23.09.2020
(73) Titulaire: Somfy Activites SA, 74300 Cluses (FR)
(72) Inventeur: COSSERAT, Hubert, 74100 Vetraz Monthoux (FR); DESBRUGERES, Thibaut, 74300 Araches la Frasse (FR); PAUCHARD, Emmanuel, 74800 Amancy (FR)
(74) Mandataire: Lavoix
(86) Numéro de dépôt international: PCT/EP2018/081801
(87) Numéro de publication internationale: WO 2019/097057

(56) Documents cités:
- WO-A1-2016/086017
- WO-A1-2017/153093

## Description

La présente invention concerne le domaine des objets connectés également appelé internet des objets également connu sous le sigle IOT pour "*Internet Of Things"* selon la terminologie anglo-saxonne. La présente invention concerne plus particulièrement un procédé de mise en service d'un objet connecté et un système de mise en service associé.

L'ajout d'un objet connecté à un réseau d'objets connectés nécessite une phase de mise en service (ou "*commissioning"* selon la terminologie anglo-saxonne). La phase de mise en service consiste à échanger, de façon sécurisée, un mot de passe entre le réseau et l'objet connecté destiné à rejoindre le réseau. Le nouvel objet connecté n'est associé au réseau que lorsque les informations d'identification sont authentifiées. Une fois que l'objet connecté a rejoint le réseau, l'objet connecté peut participer au réseau, c'est-à-dire communiquer avec les autres objets connectés du réseau.

La phase de mise en service est une des phases les plus critiques de la sécurité dans le domaine des objets connectés. La principale difficulté réside dans la transmission sécurisée du mot de passe entre le réseau d'objets connectés et l'objet connecté destiné à rejoindre ledit réseau. Il faut s'assurer que l'objet connecté, à qui le mot de passe va être donné, est le bon destinataire et non un objet connecté malveillant écoutant le réseau. De plus, le mot de passe doit être communiqué de manière chiffrée afin de s'assurer que les autres objets connectés écoutant les communications ne puissent pas décoder la communication.

L'ajout d'un objet connecté à un réseau est mis en oeuvre par un dispositif de mise en service ou commissionnaire. Le commissionnaire (ou "*commissionner"* selon la terminologie anglo-saxonne) doit avoir un lien de communication avec l'objet connecté rejoignant le réseau, typiquement, il s'agit du lien radiofréquence. Si le commissionnaire et l'objet connecté rejoignant le réseau utilisent tous les deux le même protocole de communication, par exemple le protocole IEEE 802.15.4, on parle de commissionnaire natif. Un tel commissionnaire est capable de communiquer directement avec l'objet connecté et peut établir un lien sécurisé entre eux afin d'échanger les informations nécessaires à la connexion.

Le commissionnaire peut également être un dispositif en dehors du réseau d'objets connectés n'utilisant pas le protocole de communication du réseau d'objets connectés. Il peut s'agir, par exemple, d'un ordinateur fixe ou portable, d'une tablette tactile, d'un téléphone mobile intelligent (ou "*smartphone"* selon la terminologie anglo-saxonne), ou de tout autre dispositif informatique équivalent. Dans ce cas, le commissionnaire non natif doit utiliser une passerelle assurant le lien entre le commissionnaire et le protocole de communication du réseau d'objets connectés. Cette passerelle est appelée routeur de bordure (ou "*border router"* selon la terminologie anglo-saxonne). Typiquement, le commissionnaire utilise une liaison Wi-Fi afin de communiquer avec le routeur de bordure. Un problème se pose lorsque le commissionnaire, par exemple, un téléphone intelligent, est connecté au routeur de bordure via une liaison Wi-Fi. En effet, certains téléphones intelligents privilégient la transmission via le Wi-Fi par rapport à la transmission de données. Ainsi, lorsqu'un installateur est connecté au routeur de bordure en Wi-Fi, et qu'il souhaite accéder à une page web, la requête du commissionnaire va être transmise au routeur de bordure au lieu d'être transmise à un serveur internet. Le commissionnaire ne pourra donc pas accéder à la page web souhaitée. Pour accéder à internet, l'installateur devra déconnecter le commissionnaire du routeur de bordure et donc interrompre la procédure de mise en service, puis se connecter à un serveur internet.

Un deuxième problème vient du fait que l'installateur est obligé de rester présent tout au long de la phase de mise en service du ou des objets connectés et doit attendre la fin de cette phase avant de débrancher le routeur de bordure.

Un autre problème lié à cette méthode est que le routeur de bordure est un dispositif supplémentaire ne servant que pour la phase de mise en service des objets connectés. L'installateur doit apporter ce dispositif avec les objets connectés à mettre en service et une fois la phase de mise en service terminée, l'installateur est obligé de le ramener avec lui. La seule utilité de ce dispositif est d'établir le lien entre le commissionnaire non natif et le réseau d'objets connectés.

Dans ce contexte, il est intéressant de proposer une solution permettant à un terminal mobile n'utilisant pas le protocole de communication du réseau d'objets connectés de mettre en service un ou plusieurs objets connectés sans utiliser de routeur de bordure.

Il est connu d'utiliser un commissionnaire appartenant au réseau d'objets connectés (commissionnaire natif) afin d'effectuer la phase de mise en service d'un objet connecté. L'utilisation d'un commissionnaire natif permet de se passer d'un routeur de bordure. Un problème se pose lorsque le réseau d'objets connectés ne dispose d'aucun objet connecté possédant une interface homme machine. Ce cas peut se présenter, par exemple, dans une installation domotique comprenant, par exemple, essentiellement des actionneurs, des points de commande et/ou des dispositifs d'éclairage. En l'absence d'interface homme machine, l'installateur ne dispose d'aucun moyen d'entrer les informations nécessaires à la connexion d'un objet connecté destiné à rejoindre le réseau.

Le même problème se pose lorsqu'un objet connecté, destiné à rejoindre un réseau, ne dispose que de quelques boutons ou d'un clavier comprenant de très petites touches formant ainsi une interface très peu ergonomique.

Le document WO2017/153093 A1 décrit un système de mise en service d'une pluralité d'objets connectés utilisant un routeur de bordure.

Le document WO2016/086017 A1 décrit un réseau d'objets connectés.

Un but de l'invention est notamment de corriger tout ou partie des inconvénients précités en proposant une solution permettant de se passer d'un routeur de bordure lors de la phase de mise en service, tout en facilitant cette phase pour un installateur pour tout type d'objet connecté.

A cet effet, l'invention a pour objet un procédé de mise en service indirecte d'un objet connecté destiné à rejoindre un réseau d'objets connectés selon la revendication 1.

Le procédé de mise en service indirecte d'un objet connecté comporte également des caractéristiques additionnelles selon les revendications dépendantes 2 à 10.

Selon un autre aspect, l'invention concerne un système de mise en service indirecte d'au moins un objet connecté selon la revendication 11.

Selon un mode de mise en oeuvre, l'organisateur du réseau implémente les fonctions de commissionnaire.

D'autres particularités et avantages de la présente invention apparaîtront plus clairement à la lecture de la description ci-après, donnée à titre illustratif et non limitatif, et faite en référence aux dessins annexés, sur lesquels :
- la figure 1, représente un mode de réalisation d'un système de mise en service indirecte d'un objet connecté.
- la figure 2 est un ordinogramme représentant les étapes principales d'un mode de mise en oeuvre du procédé de mise en service selon l'invention ;
- la figure 3 est un ordinogramme représentant un exemple de mise en oeuvre de l'étape d'établissement des liens fonctionnels selon l'invention.

Par la suite le terme " réseau " désignera un réseau d'objets connectés.

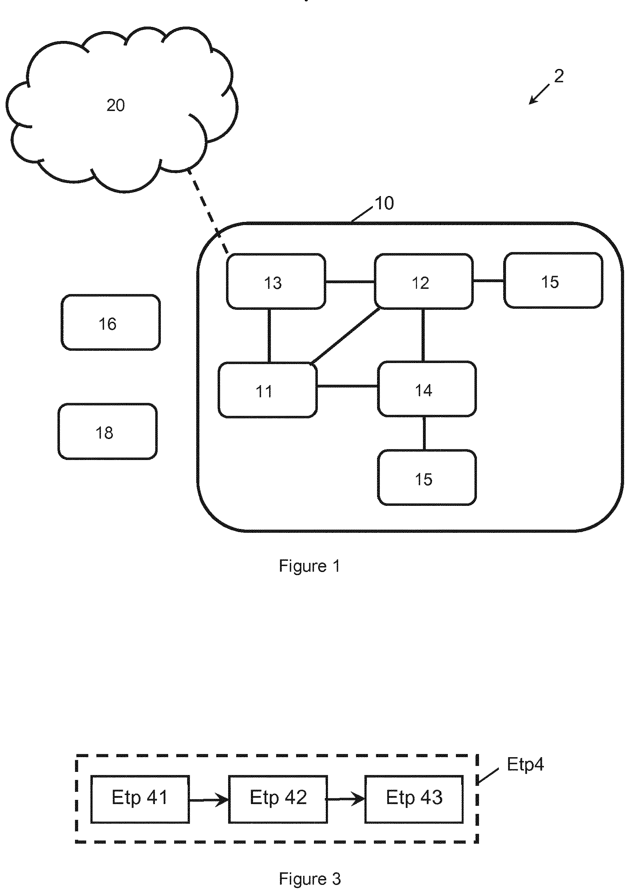

La figure 1, représente un exemple de mode de réalisation d'un système 2 de mise en service indirecte d'un objet connecté 16 pour rejoindre un réseau 10 d'objets connectés. Dans cet exemple, le réseau est un réseau sans fil configuré pour dialoguer selon un premier protocole de communication, qui est de préférence le protocole de communication IEEE 802.15.4. Suivant une variante de mise en oeuvre, il peut s'agir du protocole ZigBee. Le réseau possède une architecture maillée. Les objets connectés, éléments du réseau, peuvent être des routeurs 11, 12, 13, 14 ou des équipements terminaux 15 (également appelés "*end device"* selon la terminologie anglo-saxonne). Afin de communiquer entre eux, chaque objet connecté comprend un module de communication au moins radiofréquence comprenant une première interface réseau radiofréquence apte à échanger, sur le réseau, des messages radiofréquences selon le premier protocole de communication.

Les routeurs sont configurés pour recevoir et transmettre des messages radiofréquences sur le réseau selon au moins un protocole de communication.

Certains routeurs comprennent une deuxième interface réseau apte à échanger, sur le réseau, des messages selon un deuxième protocole de communication. Selon un mode de réalisation, la deuxième interface réseau est une interface réseau radiofréquence configurée pour échanger, sur le réseau, des messages radiofréquences. Il peut s'agir, par exemple, du standard bluetooth et de préférence du standard bluetooth à basse consommation d'énergie. La première et la deuxième interface réseau peuvent appartenir au même module de communication radiofréquence ou à deux modules de communication différents.

Suivant un mode de réalisation, certains routeurs comprennent un émetteur-récepteur asynchrone universel (ou UART, pour "*Universal Asynchronous Receiver Transmitter"* selon la terminologie anglo-saxonne) afin d'échanger des données suivant un mode de communication filaire. L'émetteur-récepteur asynchrone universel peut être compris dans le module de module de communication au moins radiofréquence afin de former un module de communication mixte radiofréquence et filaire. Suivant une variante de réalisation l'émetteur-récepteur asynchrone universel appartient à un module de communication filaire.

Certains routeurs sont également aptes à permettre, à des objets connectés 16 extérieurs au réseau, de rejoindre le réseau de façon sécurisée. Lorsqu'un routeur assure cette fonction, il est appelé commissionnaire 11. Plusieurs routeurs peuvent remplir la fonction de commissionnaire, cependant, à un instant donné, un seul commissionnaire est actif dans le réseau d'objets connectés 10. Les routeurs 14 aptes à devenir commissionnaire actif sont nommés "candidats commissionnaires ».

Lorsque le commissionnaire est capable de communiquer selon le protocole de communication du réseau d'objets connectés, par exemple, IEEE 802.15.4, il est nommé "commissionnaire natif". Le commissionnaire 11 assure la fonction de serveur d'authentification pour les nouveaux objets connectés 16 destiné à rejoindre le réseau, en mettant en oeuvre un module d'authentification.

Suivant un mode de réalisation, les routeurs 11, 12, 13, 14 sont des objets connectés alimentés par le réseau d'alimentation électrique ou secteur afin de disposer d'une grande autonomie énergétique. Les routeurs peuvent jouer des rôles différents dans le fonctionnement du réseau.

Dans le réseau d'objets connectés, un routeur particulier est chargé d'assurer la fonction d'organisateur du réseau 12 et de gérer la configuration du réseau. Lorsque l'organisateur du réseau 12 est défaillant un autre routeur est désigné automatiquement pour reprendre sa fonction. L'organisateur du réseau gère les requêtes des candidats commissionnaires ; il est configuré pour désigner quel candidat commissionnaire est autorisé à devenir l'unique commissionnaire actif pour le réseau.

Les routeurs de bordure 13 sont des routeurs spécifiques. Ils assurent le rôle de passerelle entre le réseau d'objets connectés 10 et au moins un deuxième réseau externe 20 ayant un troisième protocole de communication différent du premier protocole de communication utilisé dans le réseau d'objet connectés 10. A cet effet, le module de communication radiofréquence du routeur de bordure 13 comprend une deuxième interface réseau apte à communiquer selon le troisième protocole de communication du deuxième réseau externe. Le deuxième réseau externe peut par exemple être un réseau internet, un réseau Wi-Fi au tout autre type de réseau de communication. Le routeur de bordure peut être un dispositif que l'on vient connecter au réseau d'objets connectés.

Les équipements terminaux 15 sont situés au niveau des noeuds terminaux du réseau d'objets connectés. Les équipements terminaux 15 ne participent donc pas au routage des messages radiofréquences sur le réseau d'objets connectés 10. Certains équipements terminaux sont dits "équipements terminaux éligibles au routage". De tels équipements sont capables de devenir des routeurs du réseau lorsque de nouveaux objets connectés sont connectés à un de leurs ports.

Suivant un mode de réalisation, le réseau d'objets connectés comprend une passerelle (ou « *gateway* » selon la terminologie anglo-saxonne). La passerelle est par exemple configurée pour permettre à un terminal mobile de contrôler et /ou commander un ou plusieurs objets connectés du réseau après configuration.

Le système 2 comporte un terminal mobile 18 permettant à un installateur (non représenté) d'effectuer la mise en service indirecte de l'objet connecté 16 dans le réseau d'objets connectés 10, comme expliqué en détail par la suite.

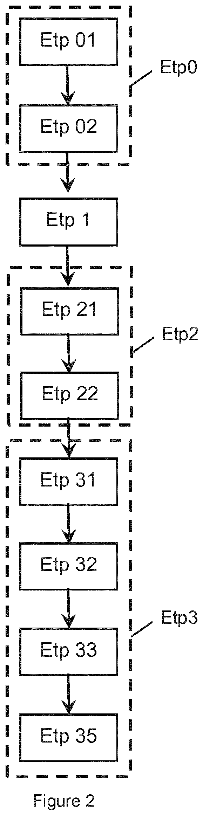

La figure 2 représente de façon schématique les principales étapes d'un exemple de mode de mise en oeuvre du procédé selon l'invention.

Le procédé de mise en service indirecte comprend une première étape Etp1 de collecte des informations utiles à la connexion d'au moins un objet connecté au réseau d'objets connectés. Il s'agit principalement de l'adresse et du mot de passe du ou des objets connectés destiné à rejoindre le réseau.

La collecte est réalisée à l'aide du terminal mobile 18 autre qu'un routeur de bordure. Par "terminal mobile" on entend tout type d'appareil mobile susceptible d'être utilisé pour collecter les informations utiles à la connexion du ou des objets connectés au réseau. Il peut s'agir, par exemple, d'un ordinateur portable, une tablette, un appareil de téléphonie mobile intelligent, etc. Cependant, dans la description suivante, le terme "terminal mobile" renvoie, préférentiellement, à un appareil de téléphonie mobile intelligent ou une tablette tactile.

Ce type de terminal mobile comprend notamment un module de communication radiofréquence permettant l'échange de données bidirectionnel à très courte distance, par exemple selon le standard Bluetooth. Il comprend également un processeur de calcul et au moins une mémoire électronique, et une ou plusieurs interfaces homme-machine permettant des interactions ergonomiques avec un utilisateur, par exemple un installateur de réseau d'objets connectés.

Le module de communication du terminal mobile ne comprend pas d'interface radiofréquence agencée pour communiquer selon le protocole de communication du réseau d'objets connectés.

Suivant un mode de réalisation, le terminal mobile comprend un émetteur-récepteur asynchrone universel.

Lorsqu'il rejoint un réseau, un objet connecté a besoin d'être authentifié auprès de ce réseau. A cet effet, chaque objet connecté possède un mot de passe unique et une adresse unique permettant de l'identifier sur le réseau. L'adresse peut être l'adresse MAC (pour "*Media Access Control"* selon la terminologie anglo-saxonne) de l'objet connecté également nommée EUI-64 (pour "*64-bit Extended Unique Identifier"* selon la terminologie anglo-saxonne). Le mot de passe est un identifiant formé d'un code alphanumérique aléatoire propre à l'objet connecté qui est généré en usine lors de sa fabrication. Ainsi le mot de passe échangé lors de la phase de mise en service n'est pas lié au réseau qu'est destiné à rejoindre l'objet connecté mais est propre à l'objet connecté. Le mot de passe est destiné à être enregistré par l'organisateur du réseau afin d'authentifier l'ajout de l'objet connecté au réseau.

Suivant un mode de réalisation, le mot de passe et/ou l'adresse de l'objet connecté peuvent être inscrits sur l'objet connecté, par exemple par gravure ou sous la forme d'une étiquette sur laquelle est imprimé l'identifiant. Suivant un autre mode de réalisation, le mot de passe et/ou l'adresse de l'objet connecté peuvent être inscrits sur l'objet connecté sous la forme d'un code barre à une ou deux dimensions, d'une étiquette d'identification radiofréquence (ou RFID pour "*Radio Frequency IDentification"* selon la terminologie anglo-saxonne), une étiquette de communication en champ proche (ou NFC pour " *Near Field Communication"* selon la terminologie anglo-saxonne) ou tout autre type d'étiquette lisible par le terminal mobile à disposition de l'installateur.

Suivant un mode de mise en oeuvre, la collecte des informations peut être réalisée par l'installateur en enregistrant manuellement, à l'aide de l'interface homme machine du terminal mobile, les informations lues sur le ou les objets connectés destinés à rejoindre le réseau, à l'aide de l'interface homme machine du terminal mobile. L'interface homme machine du terminal mobile peut être un clavier réel ou virtuel.

Suivant un autre mode de mise en oeuvre, l'installateur peut numériser le code barre contenant les informations à l'aide d'un capteur optique interne ou externe au terminal mobile, par exemple un appareil photographique incorporé au terminal mobile.

Suivant une autre variante de mise en oeuvre l'installateur peut collecter les informations utiles à la connexion en utilisant un lecteur d'étiquettes sans contact de type à identification radiofréquence et/ou à communication en champ proche interne ou externe au terminal mobile. Lorsqu'un tel lecteur est externe au terminal mobile, il existe un lien de communication, filaire ou radio, permettant de transmettre les informations collectées au terminal mobile.

Les informations collectées sont ensuite enregistrées dans une zone mémoire du terminal mobile.

Suivant un mode de mise en oeuvre préférentiel, lorsque plusieurs objets connectés sont destinés à rejoindre le réseau, l'installateur collecte tous les mots de passe et adresse de l'ensemble des objets connectés au cours de la même étape Etp1.

Lors d'une étape Etp2, les informations collectées sont ensuite transmises au réseau.

Au cours d'une sous-étape Etp21, un routeur candidat commissionnaire 14, commissionnaire 11 ou organisateur du réseau 12 appartenant au réseau 10 et comprenant un module de communication apte à communiquer selon un deuxième mode de communication est commuté dans un mode de fonctionnement dit "précommissionnaire". Par la suite, le routeur placé dans le mode de fonctionnement dit "précommissionnaire", sera appelé "précommissionnaire ".

Le deuxième mode de communication peut être un deuxième protocole de communication radiofréquence commun avec le terminal mobile, par exemple, le standard bluetooth. A cet effet, le module de communication du routeur 11, 12, 14 peut comprendre une deuxième interface radiofréquence configurée pour communiquer selon le deuxième protocole de communication.

Le mode de fonctionnement dit "précommissionnaire" permet au précommissionnaire d'activer la deuxième interface réseau de son module de communication. Suivant un mode de mise en oeuvre, le routeur dispose ainsi d'une connectivité bluetooth. De façon préférentielle, il s'agit d'une connectivité bluetooth à basse consommation d'énergie (ou BLE pour "*Bluetooth Low Energy"* selon la terminologie anglo-saxonne). Suivant une variante de réalisation, la deuxième interface réseau est comprise dans un deuxième module de communication.

Le terminal mobile collecte l'adresse réseau du précommissionnaire inscrite sur ce dernier comme énoncé précédemment. Le module de communication radiofréquence du terminal mobile se connecte ensuite au précommissionnaire via une liaison radiofréquence selon le deuxième protocole de communication en utilisant l'adresse collectée. Le module de communication radiofréquence du terminal mobile transfère ensuite les informations collectées au module de communication radiofréquence du précommissionnaire lors d'une sous-étape Etp22. Les informations transférées sont ensuite enregistrées dans une zone mémoire du précommissionnaire.

Suivant une variante de mise en oeuvre non représentée, le deuxième mode de communication est un mode de communication filaire utilisant un émetteur-récepteur asynchrone universel. L'étape Etp2 de transmission des informations collectées comprend une sous-étape de connexion du terminal mobile à un routeur candidat commissionnaire 14, commissionnaire 11 ou organisateur du réseau 12 comprenant un émetteur-récepteur asynchrone universel par l'intermédiaire d'une liaison filaire.

Suivant un mode de mise en oeuvre, le routeur 11, 12, 14 doit être placé dans le mode de fonctionnement dit "précommissionnaire" afin d'activer son émetteur-récepteur asynchrone universel.

Au cours de la sous-étape de connexion, les émetteurs-récepteurs asynchrones universels des modules de communication du terminal mobile et du précommissionnaire sont connectés ensemble. L'émetteur-récepteur asynchrone universel du terminal mobile transmet ensuite les informations collectées à l'émetteur-récepteur asynchrone universel du précommissionnaire via la liaison filaire. Les informations transférées sont ensuite enregistrées dans une zone mémoire du précommissionnaire.

Suivant un mode de mise en oeuvre, les communications entre le module de communication du terminal mobile et le précommissionnaire sont chiffrées à l'aide d'une clef partagée, à savoir le mot de passe du précommissionnaire. A cet effet, avant de dialoguer avec le précommissionnaire, le terminal mobile collecte ledit mot de passe comme énoncé précédemment.

Le procédé de mise en service comprend une étape Etp3 d'entrée du ou des objets connectées dans le réseau.

Au cours d'une sous-étape Etp31, le précommissionnaire est placé dans un mode "commissionnaire". Par la suite, un objet connecté placé dans un tel mode de fonctionnement, sera appelé "commissionnaire".

Le commissionnaire faisant partie du réseau, il est apte à dialoguer selon le premier protocole de communication, il s'agit d'un commissionnaire natif. Un commissionnaire comprend un module d'authentification configuré pour traiter les requêtes d'objets connectés destiné à rejoindre le réseau et vérifier si chacun des objets connectés destiné à rejoindre le réseau est autorisé à entrer dans le réseau.

Suivant un mode de mise en oeuvre, le basculement d'un objet connecté dans un mode "précommissionnaire" et/ou dans un mode "commissionnaire" peut être obtenu par un installateur par une action sur des touches de cet objet connecté, par exemple en appuyant sur une combinaison de touches prédéfinie ou une séquence de touches prédéfinie.

Suivant un autre mode de mise en oeuvre, le basculement dans un mode "précommissionnaire" et/ou "commissionnaire" peut être obtenu à partir du terminal mobile via la transmission, par exemple selon le standard Bluetooth, d'une commande prédéfinie à l'objet connecté. Suivant une variante de mise en oeuvre, la commande prédéfinie peut être transmise par le terminal mobile via une liaison filaire.

Le module de communication du commissionnaire 11 transmet au module de communication de l'organisateur du réseau 12 les informations collectées par le terminal mobile 18. A la réception, les informations transférées sont enregistrées dans une zone mémoire de l'organisateur du réseau.

L'objet connecté 16 destiné à rejoindre le réseau se connecte au réseau d'objets connectés 10 via une liaison radiofréquence selon le premier protocole de communication. Le module de communication radiofréquence de l'objet connecté 16 destiné à rejoindre le réseau effectue une procédure de découverte du réseau (ou "*discovery"* selon la terminologie anglo-saxonne) afin d'obtenir différentes informations sur le réseau 10, notamment l'adresse réseau du commissionnaire 11. A cet effet, l'objet connecté destiné à rejoindre le réseau émet une requête de découverte à destination de tous les objets connectés appartenant au réseau 10 via le premier protocole de communication. Le module de communication radiofréquence de l'objet connecté 16 destiné à rejoindre le réseau transmet ensuite au commissionnaire une requête afin de rejoindre le réseau en s'authentifiant, la requête comprenant notamment son mot de passe et son adresse. La requête est reçue par le module de communication radiofréquence du commissionnaire lors d'une sous-étape Etp32.

Suivant un mode de mise en oeuvre, l'envoi de la requête par le module de communication radiofréquence de l'objet connecté 16 peut être initié par l'installateur en appuyant sur une ou plusieurs touches de l'objet connecté, par exemple, suivant une séquence et/ou une combinaison de touches prédéterminée.

Suivant une variante de mise en oeuvre, l'envoi de la requête peut être initié par une commande particulière transmise par le module de communication radiofréquence du terminal mobile au module de communication radiofréquence de l'objet connecté destiné à rejoindre le réseau.

Suivant un mode de mise en oeuvre, l'envoi de la requête par le module de communication radiofréquence de l'objet connecté 16 destiné à rejoindre le réseau peut être initié par la mise sous tension de l'objet connecté.

Le module d'authentification du commissionnaire vérifie ensuite, au cours d'une sous-étape Etp33 d'authentification de l'objet connecté 16 destiné à rejoindre le réseau, si l'adresse et le mot de passe, transmis par l'objet connecté, correspond avec un couple mot de passe et adresse enregistré dans la mémoire du commissionnaire.

Si la réponse est positive, l'objet connecté 16 est considéré comme autorisé à faire partie du réseau 10 et entre dans le réseau. Une fois dans le réseau, l'objet connecté a la possibilité de communiquer avec l'ensemble des objets connectés présents sur le réseau.

Si la réponse est négative, la requête est rejetée.

Suivant un mode de mise en oeuvre, le procédé peut comprendre une sous-étape Etp35 de transmission, au terminal mobile, de l'état d'avancement de l'entrée du ou des objets connectés dans le réseau. A cet effet, le module de communication radiofréquence du commissionnaire peut transmettre un message radiofréquence, par exemple de type bluetooth, au module de communication radiofréquence du terminal mobile. Cette sous-étape peut trouver son intérêt, par exemple, lorsque plusieurs objets connectés doivent rejoindre le réseau successivement. Cela permet à l'installateur de suivre l'avancement des différents objets connectés et/ou détecter des erreurs d'authentification.

Selon l'invention, la mise en service des objets connectés se fait de façon indirecte. Les adresse et mot de passe de chaque objet connecté destiné à rejoindre le réseau sont transmis au réseau de façon indirecte, par l'intermédiaire d'un terminal mobile.

Une fois le ou les objets connectés entrés dans le réseau, le procédé de mise en service peut comprendre une étape Etp4 d'établissement de liens fonctionnels entre les différents objets connectés. Par liens fonctionnels entre les différents objets connectées on entend les différents liens unissant les différents objets connectés ayant rejoint le réseau ainsi que les liens unissant les objets connectés ayant rejoint le réseau et les objets connectés déjà présents dans le réseau. A titre illustratif, dans le cas d'une installation domotique comprenant, par exemple, des points de commande, des actionneurs et des points lumineux, les liens fonctionnels peuvent correspondre aux liaisons radiofréquence entre les points de commande et les actionneurs et/ou les points lumineux associés.

L'étape Etp4 d'établissement de liens fonctionnels est mise en oeuvre par l'organisateur du réseau 12.

En référence à la figure 3, l'étape Etp4 peut comprendre une étape préalable Etp41 de transmission, par le module de communication radiofréquence du terminal mobile et à destination du module de communication radiofréquence de l'organisateur du réseau, d'un message radiofréquence contenant la liste des liens fonctionnels entre les différents objets connectés.

Après réception, les liens fonctionnels transmis sont enregistrés, par exemple, dans une zone mémoire de l'organisateur du réseau.

Suivant un mode de mise en oeuvre préférentiel, la transmission des liens fonctionnels est réalisée en même temps que la transmission des adresses et mots de passe des objets connectés destiné à rejoindre le réseau.

Les liens fonctionnels peuvent, par exemple, être établis de façon manuelle par l'installateur à partir de l'interface homme machine du terminal mobile.

Suivant un autre mode de mise en oeuvre, les liens fonctionnels peuvent être établis de façon automatique à partir d'un logiciel applicatif enregistré dans une zone mémoire du terminal mobile. Le terminal mobile peut, par exemple, afficher des icônes représentant les objets connectés destinés à rejoindre le réseau et les objets connectés déjà présent dans le réseau. Ensuite, en tirant des traits entre les objets à connecter entre eux, l'installateur, établit les liens fonctionnels entre les différents objets connectés. Enfin, les liens fonctionnels sont enregistrés dans une mémoire du terminal mobile.

Lors d'une sous-étape Etp42 le module d'authentification du commissionnaire lit la zone mémoire de l'organisateur du réseau contenant la liste des liens fonctionnels existant entre les différents objets connectés.

Au cours d'une sous-étape Etp43, l'organisateur du réseau configure le réseau en appairant les différents objets connectés du réseau entre eux en fonction de la liste de liens fonctionnels enregistrée.

De façon avantageuse, l'étape Etp4 d'établissement des liens fonctionnels est réalisée de façon automatique par l'organisateur du réseau et ne nécessite donc pas la présence de l'installateur.

Suivant un mode de mise en oeuvre, un même routeur implémente les fonctions de commissionnaire et d'organisateur du réseau. Dans ce cas de figure, aucune transmission des mots de passe, adresse et liens fonctionnels n'est nécessaire entre le commissionnaire et l'organisateur du réseau.

Suivant un mode de mise en oeuvre, une partie du procédé peut être réalisée avant la mise en service des objets connectés destinés à rejoindre le réseau afin de faciliter la mise en service des objets connectés en automatisant certaines tâches. De façon avantageuse cela permet de réduire le temps d'intervention de l'installateur. Cette étape est d'autant plus avantageuse qu'il y a d'objets connectés à rattacher à un même réseau.

Le procédé de mise en service peut, par exemple comprendre une étape préliminaire Etp0 de préconfiguration du ou des objets connectés destinés à rejoindre un réseau. Cette étape peut par exemple être réalisée en usine ou chez l'installateur.

Le procédé de mise en service peut comprendre une sous-étape Etp01 de préconfiguration des liens fonctionnels au cours de laquelle un opérateur peut établir les liens fonctionnels entre les différents objets connectées en utilisant tous les moyens à sa disposition comme un ordinateur, ou tout autre terminal informatique.

Par exemple, on suppose que plusieurs objets connectés sont destinés à rejoindre un réseau. Il peut s'agit de la création d'un réseau ou du rattachement de plusieurs objets connectés à un réseau existant. Au cours de la sous-étape Etp01 de préconfiguration, les liens fonctionnels de chaque objet destiné à rejoindre le réseau sont établis puis sont stockés dans la mémoire d'au moins un objet connecté. Une fois préconfigurés, les objets connectés forment ainsi un ensemble préappairé.

Suivant un mode de mise en oeuvre, chaque objet connecté comprend, en mémoire, les liens fonctionnels l'unissant aux autres objets connectés destiné à rejoindre le réseau et aux objets connectés présents dans le réseau. Chaque objet connecté peut être programmé pour transmettre les liens fonctionnels stockés en mémoire à l'organisateur du réseau suite à son entrée dans le réseau.

Suivant un autre mode de mise en oeuvre, lorsque plusieurs objets connectés sont destinés à rejoindre un même réseau, un objet connecté peut être choisi pour stocker dans sa mémoire interne l'ensemble des liens fonctionnels établis. Au cours de l'étape Etp0 de préconfiguration, les liens fonctionnels de l'ensemble des objets connectés destinés à rejoindre le réseau sont stockés dans la mémoire interne de l'objet connecté désigné. L'objet connecté contenant en mémoire l'ensemble des liens fonctionnels peut être configuré pour transmettre les liens fonctionnels stockés en mémoire à l'organisateur du réseau suite à son entrée dans le réseau.

Le procédé de mise en service peut comprendre une sous-étape Etp02 de préconfiguration d'une liste d'informations utiles à la connexion de plusieurs objets connectés au réseau. Lorsque plusieurs objets connectés sont destinés à rejoindre un même réseau, un objet connecté peut être désigné pour stocker, dans sa mémoire interne, la liste des mots de passe et adresses des autres objets connectés destinés à rejoindre le réseau. Dans ce mode de mise en oeuvre, l'objet connecté désigné est configuré pour transmettre, à l'organisateur du réseau, les couples mot de passe et adresse de l'ensemble des autres objets connectés autorisés à rejoindre le réseau. La transmission des mots de passe et adresse peut avoir lieu juste après l'entrée de l'objet connecté dans le réseau.

Ainsi, lors de la mise en service du lot d'objets connectés, l'installateur collecte (Etp1) les informations utiles à la connexion de l'objet connecté désigné et les transmet (Etp2) au précommissionaire afin d'autoriser l'objet connecté désigné à rejoindre (Etp3) le réseau. Une fois l'objet connecté désigné authentifié et rattaché au réseau, ce dernier transmet, au commissionnaire, la liste des couples mot de passe et adresse des objets connectés autorisés à rejoindre le réseau.

De façon avantageuse, dans ce mode de mise en oeuvre, la collecte d'un seul couple d'informations utiles à la connexion permet l'entrée, dans le réseau, de l'ensemble des objets connectés. Cela permet de réduire les tâches de l'installateur sur le chantier d'installation ainsi que les risques d'erreur.

Grâce aux étapes de préconfiguration de la liste des objets connectés autorisés à rejoindre le réseau et de préconfiguration des liens fonctionnels, lors de la mise en service d'un lot de plusieurs objets connectés, la présence de l'installateur n'est nécessaire que pour l'entrée d'un seul objet connecté, la suite du procédé se déroulant de façon automatique.

De façon avantageuse, le procédé de mise en service indirecte selon l'invention ne nécessite aucun routeur de bordure connecté au réseau pendant la procédure. De plus, le procédé permet de bénéficier de la souplesse et de l'ergonomie d'un terminal mobile. De façon avantageuse, le terminal mobile, via ses équipements (appareil photo, lecteur de radio-identification, lecteur champs proche, etc.) et applications logicielles associées fournit à l'installateur une interface pour la mise en service d'objets connectés, notamment lors de la collecte des identifiants et mots de passe des objets connectés destinés à rejoindre le réseau et lors de l'établissement des liens fonctionnels.

Avantageusement, le terminal mobile permet, de façon temporaire de mettre en service un ou plusieurs objets connectés. Ainsi, l'installateur n'est pas obligé d'utiliser un dispositif dédié lors de phases de mise en service.

Les différents modules comme le module de communication radiofréquence et le module d'authentification peuvent être un ou plusieurs microprocesseurs, processeurs, ordinateurs ou tous autres moyens équivalents programmés de façon opportune.

Les différents modes de mise en oeuvre, différents modes de réalisation et variantes définis ci-dessus peuvent être combinés afin de générer de nouveaux modes de mise en oeuvre et de nouveaux modes de réalisation de l'invention.

## Revendications

1. Procédé de mise en service indirecte d'au moins un objet connecté (16) destiné à rejoindre un réseau (10) d'objets connectés, le réseau d'objets connectés comprenant au moins un organisateur du réseau (12) et un commissionnaire (11), comportant chacun un module de communication, le module de communication comprenant une première interface radiofréquence adaptée à communiquer selon un premier protocole de communication, le procédé étant **caractérisé en ce qu'**il comprend :
- une étape (Etp1) de collecte d'informations utiles à la connexion d'au moins un objet connecté (16) destiné à rejoindre le réseau (10) d'objets connectés, ladite collecte des informations utiles à la connexion au réseau (10) d'objets connectés étant effectuée par un terminal mobile (18) autre qu'un routeur de bordure, le terminal mobile comprenant un module de communication configuré pour communiquer selon un deuxième protocole de communication, l'objet connecté (16) destiné à rejoindre le réseau (10) d'objets connectés comprenant une première interface radiofréquence adaptée à communiquer selon le premier protocole de communication,
- une étape (Etp2) de transmission, par le terminal mobile (18), des informations collectées, au commissionnaire (11), le commissionnaire (11) comprenant une deuxième interface configurée pour communiquer selon le deuxième protocole de communication, la transmission utilisant le deuxième protocole de communication commun au terminal mobile et au commissionnaire,
- une étape (Etp3) d'entrée d'au moins un objet connecté dans le réseau d'objets connectés à l'aide des informations utiles à la connexion dudit objet connecté,
l'étape (Etp2) de transmission des informations collectées comprenant :
- une sous-étape (Etp21) d'activation de la deuxième interface du commissionnaire fonctionnant suivant le deuxième protocole de communication, et
- une sous-étape (Etp22) de transmission, par le module de communication du terminal mobile, des informations collectées via une liaison utilisant le deuxième protocole de communication.

2. Procédé selon la revendication précédente comprenant en outre une étape (Etp4) d'établissement de liens fonctionnels entre les différents objets connectés mise en oeuvre par l'organisateur du réseau (12).

3. Procédé selon l'une quelconque des revendications 1 ou 2 comprenant en outre une étape (Etp0) de préconfiguration d'au moins un objet connecté.

4. Procédé selon la revendication précédente dans lequel l'étape (Etp0) de préconfiguration comprend une sous-étape (Etp01) de préconfiguration de liens fonctionnels d'au moins un objet connecté.

5. Procédé selon la revendication 3 ou 4 dans lequel l'étape (Etp0) de préconfiguration comprend une sous-étape (Etp02) de préconfiguration d'une liste d'informations utiles à la connexion de plusieurs objets connectés au réseau.

6. Procédé selon l'une quelconque des revendications 2 à 5 dans lequel l'étape (Etp4) d'établissement des liens fonctionnels comprend :
- une sous-étape (Etp41) de réception d'un message radiofréquence contenant les liens fonctionnels,
- une sous-étape (Etp42) de lecture des liens fonctionnels dans une mémoire de l'organisateur du réseau, et
- une sous-étape (Etp43) de configuration du réseau en fonction des liens fonctionnels.

7. Procédé selon l'une quelconque des revendications précédentes, ladite deuxième interface configurée pour communiquer selon le deuxième protocole de communication du commissionnaire étant une interface radiofréquence, l'étape (Etp2) de transmission des informations collectées comprenant
- une sous-étape (Etp21) d'activation de ladite deuxième interface radiofréquence du commissionnaire fonctionnant suivant le deuxième protocole de communication, et
- une sous-étape (Etp22) de transmission, par le module de communication du terminal mobile, des informations collectées via une liaison radiofréquence utilisant le deuxième protocole de communication.

8. Procédé selon la revendication précédente dans lequel le deuxième protocole de communication est le standard Bluetooth.

9. Procédé selon l'une quelconque des revendications 1 à 6, ladite deuxième interface configurée pour communiquer selon le deuxième protocole de communication du commissionnaire étant un émetteur-récepteur asynchrone universel, dans lequel l'étape (Etp2) de transmission des informations collectées comprend :
- une sous-étape de connexion du terminal mobile au commissionnaire par l'intermédiaire d'une liaison filaire, et
- une sous-étape de transmission, par le terminal mobile, des informations collectées via la liaison filaire.

10. Procédé selon une des revendications précédentes dans lequel l'étape (Etp3) d'entrée d'au moins un objet connecté dans le réseau comprend :
- une sous-étape (Etp31) d'activation de l'interface radio fonctionnant suivant le premier protocole de communication du module de communication radiofréquence du commissionnaire,
- une sous-étape (Etp32) de réception d'une requête de l'objet connecté (16) destiné à rejoindre le réseau par le module de communication radiofréquence du commissionnaire, et
- une sous-étape (Etp33) d'authentification de l'objet connecté destiné à rejoindre le réseau.

11. Système (2) de mise en service indirecte d'au moins un objet connecté, le système comprenant :
- un réseau (10) d'objets connectés comprenant au moins un organisateur du réseau (12) et un commissionnaire (11),
- au moins un objet connecté (16) destiné à rejoindre le réseau (10) d'objets connectés,
- au moins un terminal mobile (18) configuré pour mettre en oeuvre le procédé de mise en service indirecte selon une des revendications précédentes,
chaque objet connecté comportant un module de communication radiofréquence comprenant une première interface radiofréquence adaptée pour communiquer selon un premier protocole de communication.

12. Système (2) selon la revendication précédente dans lequel l'organisateur du réseau (12) implémente les fonctions de commissionnaire.

## Patentansprüche

1. Verfahren zur indirekten Inbetriebnahme mindestens eines verbundenen Objekts (16), das dazu bestimmt ist, einem Netzwerk (10) verbundener Objekte beizutreten, wobei das Netzwerk verbundener Objekte mindestens einen Netzwerkorganisator (12) und einen Kommissionär (11) umfasst, die jeweils ein Kommunikationsmodul umfassen, wobei das Kommunikationsmodul eine erste Radiofrequenzschnittstelle umfasst, die zur Kommunikation gemäß einem ersten Kommunikationsprotokoll geeignet ist, wobei das Verfahren **dadurch gekennzeichnet ist, dass** es umfasst:
- einen Schritt (Etp1) zum Sammeln von Informationen, die für die Verbindung mindestens eines verbundenen Objekts (16) nützlich sind, das dazu bestimmt ist, sich dem Netz (10) verbundener Objekte anzuschließen, wobei das Sammeln der Informationen, die für die Verbindung mit dem Netz (10) verbundener Objekte nützlich sind, durch ein mobiles Endgerät (18) erfolgt, das kein Edge-Router ist, wobei das mobile Endgerät ein Kommunikationsmodul umfasst, das konfiguriert ist, um gemäß einem zweiten Kommunikationsprotokoll zu kommunizieren, wobei das verbundene Objekt (16), das dazu bestimmt ist, sich dem Netz (10) verbundener Objekte anzuschließen, eine erste Radiofrequenzschnittstelle umfasst, die angepasst ist, um gemäß dem ersten Kommunikationsprotokoll zu kommunizieren,
- einen Schritt (Etp2) der Übertragung der gesammelten Informationen, durch das mobile Endgerät (18), an den Kommissionär (11), wobei der Kommissionär (11) eine zweite Schnittstelle umfasst, die konfiguriert ist, um gemäß dem zweiten Kommunikationsprotokoll zu kommunizieren, wobei die Übertragung das zweite Kommunikationsprotokoll verwendet, das dem mobilen Endgerät und dem Kommissionär gemeinsam ist,
- einen Schritt (Etp3) des Eingebens mindestens eines verbundenen Objekts in das Netz verbundener Objekte mithilfe von Informationen, die für die Verbindung des verbundenen Objekts nützlich sind,
der Schritt (Etp2) des Übertragens der gesammelten Informationen umfassend:
- einen Unterschritt (Etp21) der Aktivierung der zweiten Schnittstelle des Kommissionärs, die gemäß dem zweiten Kommunikationsprotokoll arbeitet, und
- einen Unterschritt (Etp22) der Übertragung der gesammelten Informationen, durch das Kommunikationsmodul des mobilen Endgeräts, über eine Verbindung, die das zweite Kommunikationsprotokoll verwendet.

2. Verfahren nach dem vorhergehenden Anspruch, das außerdem einen Schritt (Etp4) zur Herstellung von funktionalen Verbindungen zwischen den verschiedenen verbundenen Objekten umfasst, der vom Netzwerkorganisator (12) umgesetzt wird.

3. Verfahren nach einem der Ansprüche 1 oder 2, das außerdem einen Schritt (Etp0) zur Vorkonfiguration von mindestens einem verbundenen Objekt umfasst.

4. Verfahren nach dem vorhergehenden Anspruch, bei dem der Schritt (Etp0) der Vorkonfiguration einen Unterschritt (Etp01) der Vorkonfiguration von funktionalen Verbindungen von mindestens einem verbundenen Objekt umfasst.

5. Verfahren nach Anspruch 3 oder 4, bei dem der Schritt (Etp0) der Vorkonfiguration einen Unterschritt (Etp02) der Vorkonfiguration einer Liste von Informationen umfasst, die für die Verbindung mehrerer mit dem Netz verbundener Objekte nützlich sind.

6. Verfahren nach einem der Ansprüche 2 bis 5, wobei der Schritt (Etp4) zur Erstellung funktionaler Verbindungen Folgendes umfasst:
- einen Unterschritt (Etp41) des Empfangens einer Radiofrequenznachricht, die die funktionalen Verbindungen enthält,
- einen Unterschritt (Etp42) des Lesens der funktionalen Verbindungen aus einem Speicher des Netzwerkorganisators, und
- einen Unterschritt (Etp43) zur Konfiguration des Netzwerks auf der Grundlage der funktionalen Verbindungen.

7. Verfahren nach einem der vorhergehenden Ansprüche, wobei die zweite Schnittstelle, die so konfiguriert ist, dass sie gemäß dem zweiten Kommunikationsprotokoll des Kommissionärs kommuniziert, eine Radiofrequenzschnittstelle ist, wobei der Schritt (Etp2) der Übertragung der gesammelten Informationen Folgendes umfasst
- einen Unterschritt (Etp21) der Aktivierung der zweiten Radiofrequenzschnittstelle des Kommissionärs, die gemäß dem zweiten Kommunikationsprotokoll arbeitet, und
- einen Unterschritt (Etp22) der Übertragung der gesammelten Informationen, durch das Kommunikationsmodul des mobilen Endgeräts, über eine Radiofrequenzverbindung, die das zweite Kommunikationsprotokoll verwendet.

8. Verfahren nach dem vorhergehenden Anspruch, wobei das zweite Kommunikationsprotokoll der Bluetooth-Standard ist.

9. Verfahren nach einem der Ansprüche 1 bis 6, wobei die zweite Schnittstelle, die so konfiguriert ist, dass sie gemäß dem zweiten Kommunikationsprotokoll des Kommissionärs kommuniziert, ein universeller asynchroner Sender/Empfänger ist, wobei der Schritt (Etp2) der Übertragung der gesammelten Informationen Folgendes umfasst:
- einen Unterschritt der Verbindung des mobilen Endgeräts mit dem Kommissionär über eine Drahtverbindung, und
- einen Unterschritt der Übertragung der gesammelten Informationen über die Drahtverbindung durch das mobile Endgerät.

10. Verfahren nach einem der vorhergehenden Ansprüche, wobei der Schritt (Etp3) des Eingebens mindestens eines verbundenen Objekts in das Netzwerk umfasst:
- einen Unterschritt (Etp31) der Aktivierung der Radioschnittstelle, die gemäß dem ersten Kommunikationsprotokoll des Radiofrequenz-Kommunikationsmoduls des Kommissionärs funktioniert,
- einen Unterschritt (Etp32) des Empfangens einer Anfrage des verbundenen Objekts (16), das dem Netzwerk beitreten soll, durch das Radiofrequenz-Kommunikationsmodul des Kommissionärs, und
- einen Unterschritt (Etp33) zur Authentifizierung des verbundenen Objekts, das dazu bestimmt ist, dem Netzwerk beizutreten.

11. System (2) zur indirekten Inbetriebnahme von mindestens einem verbundenen Objekt, wobei das System Folgendes umfasst:
- ein Netzwerk (10) verbundener Objekte, das mindestens einen Netzwerkorganisator (12) und einen Kommissionär (11) umfasst,
- mindestens ein verbundenes Objekt (16), das dazu bestimmt ist, sich dem Netzwerk (10) verbundener Objekte anzuschließen,
- mindestens ein mobiles Endgerät (18), das so konfiguriert ist, dass es das Verfahren der indirekten Inbetriebnahme nach einem der vorhergehenden Ansprüche durchführt,
wobei jedes verbundene Objekt ein Radiofrequenz-Kommunikationsmodul mit einer ersten Radiofrequenzschnittstelle umfasst, die zur Kommunikation gemäß eines ersten Kommunikationsprotokolls geeignet ist.

12. System (2) nach dem vorherigen Anspruch, in dem der Netzwerkorganisator (12) die Funktionen eines Kommissionärs implementiert.

## Claims

1. A method for indirect commissioning of a connected object (16) intended to join a network (10) of connected objects, the network of connected objects comprising at least an organizer of the network (12) and a commissioner (11), each including a communication module, the communication module comprising a first radiofrequency interface suitable for communicating according to a first communication protocol, the method being **characterized in that** it comprises:
- a step (Etp1) for collecting useful information for the connection of at least one connected object (16) intended to join the network (10) of connected objects, said collecting of useful information for the connection to the network of connected objects being carried out by a mobile terminal (18) other than a border router, the mobile terminal comprising a communication module configured to communicate according to a second communication protocol, the connected object (16) intended to join the network (10) of connected objects comprising a first radiofrequency interface adapted for communicating according to the first communication protocol,
- a step (Etp2) for transmission, by the mobile terminal (18), of the collected information to the commissioner (11), the commissioner (11) comprising a second interface configured to communicate according to the second communication protocol, the transmission using the second communication protocol common to the mobile terminal and the commissioner,
- a step (Etp3) for entry, by at least one connected object, into the network of connected objects using information useful for the connection of said connected object,
the step (Etp2) for transmission of the collected information comprising:
- a substep (Etp21) for activating the second interface of the commissioner functioning according to the second communication protocol, and
- a substep (Etp22) for transmission, by the communication module of the mobile terminal, of information collected via a link using the second communication protocol.

2. The method according to the preceding claim, further comprising a step (Etp4) for establishing functional links between the various connected objects implemented by the organizer of the network (12).

3. The method according to any one of claims 1 or 2, comprising a step (Etp0) for pre-configuring at least one connected object.

4. The method according to the preceding claim, wherein the pre-configuring step (Etp0) comprises a sub-step (Etp01) for pre-configuring functional links of at least one connected object.

5. The method according to claim 3 or 4, wherein the pre-configuration step (Etp0) comprises a sub-step (Etp02) for pre-configuration of a list of information useful for the connection of several objects connected to the network.

6. The method according to any one of claims 2 to 5, wherein the step (Etp4) for establishing functional links comprises:
- a sub-step (Etp41) for receiving a radiofrequency message containing the functional links,
- a sub-step (Etp42) for reading functional links in a memory of the organizer of the network, and
- a sub-step (Etp43) for configuring the network as a function of the functional links.

7. The method according to any one of the preceding claims, said second interface of the commissioner configured to communicate according to the second communication protocol being a radiofrequency interface, the step (Etp2) for transmitting the collected information comprising:
- a sub-step (Etp21) for activating said radiofrequency second network interface of the commissioner operating according to the second communication protocol, and
- a sub-step (Etp22) for transmission, by the communication module of the mobile terminal, of the information collected via a radiofrequency link using the second communication protocol.

8. The method according to the preceding claim, wherein the second communication protocol is the Bluetooth standard.

9. The method according to any one of claims 1 to 6, said second interface of the commissioner configured to communicate according to the second communication protocol being a universal asynchronous receiver transmitter, wherein step (Etp2) for transmitting the collected information comprises:
- a sub-step for connecting the mobile terminal to the commissioner by means of a wired connection, and
- a sub-step for transmission, by the mobile terminal, of information collected via the wired connection.

10. The method according to one of the preceding claims, wherein the step (Etp3) for entry of at least one connected object into the network comprises:
- a sub-step (Etp31) for activation of the radio interface working according to the first communication protocol of the radiofrequency communication module of the commissioner,
- a sub-step (Etp32) for reception of a request from the connected object (16) intended to join the network by the radiofrequency communication module of the commissioner, and
- a sub-step (Etp33) for authentication of the connected object intended to join the network.

11. A system (2) for indirectly commissioning at least one connected object, the system comprising:
- a network (10) of connected objects comprising at least an organizer of the network (12) and a commissioner (11),
- at least one connected object (16) intended to join the network (10) of connected objects,
- at least one mobile terminal (18) configured to carry out the indirect commissioning method according to one of the preceding claims,
each connected object including a radiofrequency communication module comprising a first radiofrequency interface suitable for communicating according to a first communication protocol.

12. The system (2) according to the preceding claim, wherein the organizer of the network (12) implements the commissioner functions.
